# FASCICULE DE BREVET EUROPEEN

(11) **EP 1 579 686 B1**
(45) Date de publication et mention de la délivrance du brevet: **16.04.2014**
(21) Numéro de dépôt: 03810004.6
(22) Date de dépôt: 19.12.2003
(51) Int. Cl.: H04N 5/913

(54) **MARQUAGE PERSONNALISE POUR LA PROTECTION DE FLUX AUDIOVISUELS NUMERIQUES**
INDIVIDUALISIERTE KENNZEICHNUNG ZUR SCHUTZ DIGITALER AUDIOVIDEODATENSTRÖME
PERSONALIZED MARKING FOR PROTECTING DIGITAL AUDIOVISUAL STREAMS

(30) Priorité: 31.12.2002 FR 0216918
(43) Date de publication de la demande: 28.09.2005
(73) Titulaire: Querell Data Limited Liability Company, Dover, DE 19904 (US)
(72) Inventeur: LECOMTE, Daniel, F-75116 PARIS (FR); PARAYRE-MITZOVA, Daniela, F-75018 PARIS (FR); GEORGES, Sébastien, 92300 Levallois Perret (FR)
(74) Mandataire: Kazi, Ilya
(86) Numéro de dépôt international: PCT/FR2003/050193
(87) Numéro de publication internationale: WO 2004/062281

(56) Documents cités:
- EP-A- 0 107 567
- EP-A- 1 187 478
- WO-A-97/46012
- US-A- 4 528 588

## Description

Le problème général est de fournir un procédé capable de transmettre de façon sécurisée des données audiovisuelles et multimédia de haute qualité visuelle et d'un format numérique quelconque en direct ou en différé vers un écran de visualisation et/ou pour être enregistré sur le disque dur ou tout autre dispositif de sauvegarde d'un boîtier reliant le réseau de télétransmission à un écran de type moniteur, écran de télévision, vidéo projecteur ou écran de projection tout en préservant la qualité audiovisuelle mais en évitant toute utilisation frauduleuse comme la possibilité de faire des copies pirates, analogiques ou numériques, de films ou de programmes audiovisuels visualisés via ledit boîtier décodeur.

La présente invention se rapporte plus particulièrement à un dispositif capable de transmettre de façon sécurisée un ensemble de films de haute qualité visuelle vers un écran de visualisation type écran de télévision et/ou pour être enregistré sur le disque dur ou sur tout autre support d'enregistrement d'un boîtier reliant le réseau de télétransmission à l'écran de visualisation tel qu'un écran de télévision ou un moniteur d'ordinateur personnel, mais en évitant toute utilisation frauduleuse comme la possibilité de faire des copies non autorisées de films ou de programmes audiovisuels depuis ledit boîtier décodeur.

La demande en services multimédias interactifs est de plus en plus importante. Les systèmes de distribution d'informations multimédias sur DVDs ou basés sur les réseaux de télécommunication, par exemple les systèmes de vidéo à la demande sont en pleine expansion et sont caractérisés par leur complexité et par leur insécurité par rapport au piratage, malgré les nombreux procédés et systèmes de sécurisation existants. Ces systèmes de distribution sont le plus souvent très coûteux à implémenter chez l'utilisateur, manquent de sécurité, de flexibilité à l'utilisation et d'adaptabilité aux différents clients et à leurs besoins. De plus, ils sont souvent piratés par des personnes mal intentionnées, malgré les divers procédés de protection ou de traçabilité, comme le « watermarking ». Le « watermarking », appelé aussi filigrane numérique ou tatouage numérique, est une technique de marquage de contenu visuel ou sonore, contenu numérique tel que des images, des flux vidéo ou des flux audio. La technique consiste en un traitement du contenu de manière à insérer des informations dans le contenu. En général, les informations insérées sont invisibles lors de la vision du contenu, mais peuvent être retrouvées en appliquant des traitements audit contenu. Deux types de filigranes existent :
- le filigrane fragile : les informations insérées sont affectées par une modification du contenu ; ce type de filigrane est utilisé pour détecter si le contenu a été modifié ;
- le filigrane robuste : les informations insérées sont conservées même si le contenu est modifié ; ce type de filigrane est par exemple utilisé pour associer des droits d'auteur à une oeuvre.

C'est-à-dire que certains détenteurs de films ou programmes audiovisuels en font des copies frauduleuses qu'ils distribuent alors via différents supports (Internet, DVDs pirates). En effet, la plupart des systèmes de protection actuels s'appuient uniquement sur une protection par cryptage du flux numérique ; or une fois décrypté sur le poste du client, le film n'est plus protégé et peut être copié sur d'autres supports comme une simple cassette VHS par exemple à partir d'un magnétoscope branché entre la sortie vidéo du décodeur et le téléviseur.

Différentes solutions de tatouage existent, afin de corriger ce problème, qui résistent aux diverses manipulations que ladite copie frauduleuse peut subir ; toutefois elles ne permettent pas d'identifier immédiatement qui est la personne à l'origine de la copie et donc de la diffusion frauduleuse. Sans une identification visuelle immédiate et simple des coordonnées des personnes à l'origine de la fraude, la copie et la distribution de programmes audiovisuels piratés se poursuivront.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (boucle locale radio) ou via des réseaux DAB (Digital Audio Broadcasting), etc. Par ailleurs, pour éviter le piratage des oeuvres ainsi diffusées, ces dernières sont souvent cryptées ou embrouillées par divers moyens bien connus de l'homme de l'art.

Toutefois, l'inconvénient principal de toutes les solutions actuelles est qu'en cas de piratage du système de protection, notamment par des systèmes de fausses cartes à puce ou par simulation des clés de décryptage, les oeuvres audiovisuelles sont susceptibles d'être diffusées de façon non contrôlée sous une forme numérique parfaite, c'est-à-dire en tout point conformes à l'original. De plus, une seule copie piratée d'un tel programme audiovisuel peut permettre au pirate qui en est à l'origine de commercialiser à grande échelle l'oeuvre piratée puisque celle-ci est parfaite.

Une des solutions consiste à marquer numériquement les copies numériques distribuées. Dans cette optique, plusieurs brevets ont été déposés. Ainsi, on connaît par le document US2002129253 (Langelaar Gerrit Cornelis) un procédé de traitement de flux MPEG compressés consistant à marquer directement le signal MPEG compressé par la modification de valeurs présentes dans le flux suivant un motif de tatouage. Toutefois ce type de procédés ne garantit pas qu'un usager malveillant ne puisse pas réaliser de copie du film protégé sous une autre forme que celle sous laquelle on lui a fourni. En particulier, ces procédés ne garantissent pas l'impossibilité de produire des copies du film sous forme de cassettes VHS qui permettraient une commercialisation des copies illicites. De même ils n'empêchent pas la production de copies du film sous formes compressées numériques de type DivX ou VCD, bien connues de l'homme de l'art, et qui sont l'un des principaux supports de films piratés disponibles sur Internet.

Le document WO9746012 (Ryan John O) propose une solution de marquage des flux audiovisuels basée sur de légères distorsions spatiales des pixels des images vidéo grâce à des motifs de déformations sélectionnés. Ce type de marquage est invisible à l'oeil nu et permet de transmettre des informations dans le flux vidéo à l'insu de la personne qui l'utilise. Ces informations pouvant notamment permettre l'identification de la source et la date d'une copie non autorisée de l'image vidéo. Ce type de modification est également prévu de façon à résister à un changement de support de la vidéo, notamment à un portage sur cassette VHS, ou changement de format en DivX ou VCD.

De même le document US4528588 (Loefberg Bo) présente une solution qui comprend la transmission d'un signal audiovisuel codé, par exemple par des systèmes de clés bien connus de l'homme de l'art, caractérisé en ce que ledit signal est décodé sur l'équipement destinataire et en même temps marqué par une information d'identification, spécifique de l'équipement client ou de son possesseur. Ladite information étant introduite de telle façon, spatialement et fréquentiellement, que son extraction est rendue difficile. Ladite information étant de plus obligatoirement insérée dans le flux grâce à un système impliquant une carte magnétique ou à puce qui contient à la fois la ou les clés numériques nécessaires au décodage dudit signal et les informations d'identification à insérer. L'appel aux clés de décodage ne peut se faire sans utiliser les informations d'identification. La marque insérée dans le flux est un mot binaire inséré grâce à un système de modifications des niveaux du signal vidéo à certains endroits bien précis, connus du dispositif spécifique chargé de repérer ladite marque dans un flux vidéo. La marque est de plus invisible de façon à compliquer la tâche d'un individu mal intentionné qui souhaiterait la retirer. Toute copie du film ainsi protégée, sous quelque forme que ce soit, contient la même marque que la copie du signal dont il est issu. Ainsi, au cas où une copie d'un signal est identifiée comme pirate, on peut identifier la personne et l'équipement à l'origine de la copie frauduleuse et ainsi la condamner. La correspondance entre une marque et l'individu détenteur de la copie est réalisée grâce à une base de données, contenue sur un serveur contacté lors de la location de la vidéo.

Ces solutions ont toutefois toutes en commun qu'elles nécessitent la comparaison entre la copie d'origine d'un film et la copie piratée de façon à pouvoir identifier la marque insérée dans le signal. Ceci implique une centralisation des tests d'identification dans un lieu où serait stockée la copie originelle, ou la distribution d'un grand nombre de copies de l'original. Dans tous les cas, cela pose des problèmes pratiques et l'identification de la source d'une copie peut ainsi devenir laborieuse.

De plus, ces solutions nécessitent toutes un matériel spécifique et des spécialistes formés en conséquence pour procéder à l'identification. En effet, de grands efforts sont faits pour rendre la marque insérée la plus discrète possible afin d'empêcher les pirates de la repérer et donc de la retirer. Or plus la marque est difficile à repérer pour un pirate, plus elle demande un matériel complexe côté vérification pour être repérée, car sinon le pirate pourrait constituer son propre appareil et ainsi contrer le système de protection. Là encore, cela pose des problèmes pratiques et rend l'identification de la source d'une copie pirate laborieuse à obtenir.

Enfin, ces solutions ne dissuadent guère les pirates de procéder à des copies. En effet, les marques insérées étant invisibles, un pirate peut se dire qu'en manipulant la vidéo d'origine via des changements de supports ou des opérations, il peut réussir à s'en débarrasser. Il est d'autant plus enclin à le faire qu'il sait que très peu de copies pirates seront testées et identifiées parce que les méthodes d'identification associées sont très laborieuses. Ainsi, même si la marque résiste à ses manipulations, il ne risque de toutes façons quasiment rien. Au courant de toutes les limitations des systèmes actuels, de nombreux individus n'hésitent pas à pirater et distribuer des copies frauduleuses de films pour lesquels ils n'ont aucun droit.

La présente invention remédie à l'art antérieur en proposant un système sécurisé visant à dissuader les pirates de faire des copies frauduleuses et surtout à dissuader les pirates de faire de la diffusion des oeuvres piratées auprès d'autres personnes.

Afin de corriger ces différents défauts, l'invention concerne selon son acceptation la plus générale un procédé de distribution de flux vidéo à une pluralité de destinataires, comportant une étape de marquage consistant à ajouter sur ledit flux vidéo au moins un élément visuel caractérisé en ce que ladite étape de marquage est appliquée à un flux vidéo originel commun à tous les destinataires, et est personnalisée pour une partie au moins des destinataires par l'ajout d'un élément visuel spécifique à l'équipement client destinataire.

Selon un mode de réalisation préféré de ce procédé, ledit élément visuel est généré en deux étapes, une première étape consistant à traiter des données de marquage au format quelconque de façon à générer des objets de marquage décrivant l'élément visuel à afficher, et une deuxième étape consistant à ajouter ledit élément visuel sur ledit flux vidéo.

De plus, l'étape d'ajout dudit élément visuel est accompagnée d'une étape d'ajout de modifications invisibles.

Dans une variante, au moins l'une desdites étapes d'ajout est effectuée avant le décodage du flux vidéo dans l'équipement destinataire.Dans une autre variante, au moins l'une desdites étapes d'ajout est effectuée après le décodage du flux vidéo dans l'équipement destinataire.

Avantageusement, lesdites modifications invisibles sont caractéristiques d'une signature numérique, ladite signature numérique étant détectable par un algorithme approprié de détection appliqué au flux contenant lesdites modifications invisibles.

De préférence, ladite signature numérique est obtenue à partir des données de marquage.

Avantageusement, les données de marquage sont différentes et personnalisées pour chaque client. De même, dans un mode de réalisation, ledit élément visuel introduit dans ledit flux vidéo est différent et personnalisé pour chaque client.

Dans une variante de ce procédé, ledit élément visuel est un identifiant du client visible lors de l'affichage du flux vidéo marqué. Alternativement, l'élément visuel inclut un message destiné au client.

Avantageusement, l'étape de génération des objets de marquage à partir des données de marquage permet de faire varier la position sur l'écran, la couleur, l'espacement, la géométrie et la présence dudit élément visuel, pendant tout ou partie de l'affichage dudit flux vidéo.

Dans une variante de ce procédé, l'étape d'ajout dudit élément visuel sur ledit flux vidéo s'effectue sur l'équipement serveur multimédia à partir duquel ledit flux vidéo est envoyé au client dans une phase ultérieure.

Dans une autre variante, l'étape d'ajout dudit élément visuel sur ledit flux vidéo s'effectue sur l'équipement client.

Selon un mode de réalisation particulier, les données de marquage proviennent d'un serveur de protection des droits audiovisuels lors du visionnage dudit flux vidéo.

Selon un autre mode de réalisation, les données de marquage proviennent d'un module présent sur l'équipement client.

Avantageusement, le visionnage dudit flux vidéo est conditionné par la connexion audit serveur de protection des droits audiovisuels et le serveur est relié à une base de données de profils clients incluant les données de marquage associées à chaque client.

L'invention concerne également un équipement pour la distribution d'un flux vidéo marqué comprenant un module de décodage standard du format dudit flux vidéo et un module de composition chargée d'interpréter des données de marquage et d'inclure ledit élément visuel sur ledit flux vidéo.

Avantageusement, ledit équipement comprend un lecteur de carte à puce relié à une carte à puce contenant lesdites données de marquage.

Enfin, la présente invention concerne un système pour la fabrication d'un flux marqué comprenant un équipement pour la distribution d'un flux vidéo, un moyen de stockage dudit flux vidéo relié audit équipement, un moyen de stockage desdites données de marquage relié audit équipement, un dispositif d'affichage dudit flux vidéo et un dispositif de stockage du flux vidéo modifié.

La présente invention sera mieux comprise à la lecture de la description des exemples non limitatifs de réalisation qui suivent, se référant aux dessins annexés où :
- la figure 1 décrit l'architecture d'ensemble d'un système pour la mise en oeuvre du procédé selon l'invention
- la figure 2 décrit l'architecture d'un sous-ensemble d'un système pour la mise en oeuvre du procédé selon l'invention
- la figure 3 représente un mode de réalisation particulier d'un système de synthèse de flux conforme à l'invention.

Le principe général d'un procédé de sécurisation d'un flux vidéo est exposé ci-après.

L'idée générale est d'introduire un marquage visuel dans le flux vidéo à l'aide d'informations nouvelles dites « données de marquage », des informations ou messages personnalisés et ciblés en fonction de chaque utilisateur, de ses droits, de l'application et de l'usage qui est fait du flux audiovisuel.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (boucle locale radio), via des réseaux DAB (Digital Audio Broadcasting) ou via des réseaux de télécommunications numériques (GSM, GPRS, UMTS), etc. Par ailleurs, pour éviter le piratage des oeuvres ainsi diffusées, ces dernières sont souvent cryptées par divers moyens bien connus de l'homme de l'art. Dans la réalisation la plus générale, les systèmes offrant des services audiovisuels sont basés sur le principe d'un système client - serveur dont les acteurs sont reliés par un réseau de télécommunication. Le client s'adresse au serveur à travers une interface utilisateur pour commander un contenu audiovisuel, ou bien le contenu audiovisuel se trouve déjà chez l'utilisateur. Le serveur, en fonction des droits de l'utilisateur lui envoie le contenu audiovisuel et/ou la (les) clef(s) de décryptage. Une fois le film décrypté chez le client, il est visualisé et peut être facilement copié et diffusé à d'autres utilisateurs, sans possibilité de contrôle, de suivi, de traçabilité ou de vérification.

Une des techniques de l'état de l'art les plus connues pour la traçabilité est le tatouage. Ledit tatouage dépend avantageusement du ou des terminaux sur lesquels le programme vidéo est joué ou transite. L'inconvénient de ces solutions est que l'on ne peut pas surprendre les personnes qui regardent un film piraté sans avoir à appliquer un outil approprié pour la détection du tatouage. Ceci a pour conséquence que seule une équipe de spécialistes, équipés d'outils adaptés, est capable de prouver la culpabilité d'un pirate en démontrant que celui-ci possédait une copie privée d'un programme vidéo qu'il a dupliquée et distribuée. La présente invention présente la solution d'introduire dans le flux vidéo un élément visible, que l'on appellera désormais élément visuel dans la suite de ce document, et directement compréhensible par tout être humain, de type texte, image, objet vidéo, de manière personnalisée, pour chaque utilisateur, chaque terminal et chaque session de visualisation, afin de pouvoir repérer immédiatement si l'utilisateur possède des droits sur les films visionnés par un simple contrôle d'identité, et empêcher aussi que l'utilisateur distribue sans autorisation le film à d'autres personnes.

Plusieurs variantes de ce procédé d'insertion d'éléments visuels et personnalisés dans un flux vidéo numérique sont réalisées dans la présente invention.

Une première variante est l'insertion d'un élément visuel pendant la lecture et l'affichage d'un film numérique qui est ou non crypté. Le module de composition, chargé de l'insertion de l'élément visuel, étant intégré dans le décodeur vidéo numérique, qui dès la demande de lecture et d'affichage de la part du client, introduit automatiquement un élément visuel dans le flux numérique. Cet élément visuel peut être de différents types : une image, un logo, un texte, une vidéo. L'élément visuel est soit figé sur un emplacement donné de l'écran, soit en mouvement sur l'écran au cours du film. Avantageusement, sa forme, son type et son apparence sont changeants. Sa présence à l'écran est soit permanente soit épisodique. Avantageusement l'élément visuel crée un lien direct avec l'utilisateur, an affichant par exemple son nom, son numéro de téléphone ou son adresse. Ledit élément étant dans ce cas généré grâce au traitement de données de marquage provenant du disque dur ou de la mémoire dédiée au logiciel d'affichage du flux et/ou d'une carte à puce insérée dans l'équipement client. Les données de marquage sont des informations binaires décrivant le contenu de l'élément à afficher comme par exemple le nom du client, son adresse ou son numéro de téléphone ou bien encore une image ou une vidéo contenant les mêmes informations précédemment citées. Ces données de marquage sont avantageusement cryptées.

Une autre variante est caractérisée en ce que lesdites données de marquage sont obtenues par l'équipement client depuis un serveur de protection de droits audiovisuels. Ainsi, lorsque le client se connecte au serveur de protection de droits audiovisuels au moment où il souhaite regarder le programme vidéo qu'il a en sa possession, ledit serveur lui envoie des données de marquage qui seront traitées et interprétées par le module de composition de l'équipement client, ce qui aura pour conséquence de faire afficher un élément visuel spécifique au client sur son écran de visualisation.

Dans une autre variante, le boîtier « Set-Top-Box » (STB) servant de dispositif d'interface entre le dispositif d'affichage du client et le serveur multimédia, qui contient le programme vidéo que ledit client souhaite regarder, contient un module de composition. Après la commande et le téléchargement du film vidéo à partir du serveur multimédia, le STB contenant le profil du client (identité, droits, habitudes) insère un élément visuel pendant la lecture et l'affichage du film. Dans le cas où le STB ne possède pas le profil du client, il va chercher des données de marquage dans une base de données du serveur concernant le film téléchargé et le profil du client, et décide de graver l'élément visuel.

Une autre réalisation est l'intégration du module de composition dans le serveur multimédia. Le client se connecte à un serveur multimédia et commande un film, le serveur lui envoie un film crypté de façon personnalisée qui contient un élément visuel personnalisé spécifique et lui demande par exemple de payer ses droits pour visionner le film. Lorsque le client est en règle avec ses droits, le film qu'il regarde contient un élément visuel et personnalisé qui lui est spécifique et qui l'identifie.

Une autre réalisation se caractérise en ce que l'équipement client se connecte à un serveur de protection de droits audiovisuels contenant l'information nécessaire au visionnage du film comme par exemple les clés nécessaires à son décryptage. Ledit serveur envoie alors une information numérique personnalisée contenant la clé nécessaire au décryptage et les données de marquage relatives au client, qui vont permettre la reconstitution du film sur lequel sera apposé un élément visuel d'identification, spécifique du client.

Une autre réalisation de l'invention concerne un procédé pour la distribution de séquences vidéos numériques selon un format de flux nominal constitué par une succession de trames comprenant chacune au moins un bloc numérique regroupant un certain nombre de coefficients correspondant à des éléments vidéo simples codés numériquement selon un mode précisé à l'intérieur du flux concerné et utilisé par tous les décodeurs vidéos capables de le décoder afin de pouvoir de l'afficher correctement. Ce procédé comporte :
- une étape préparatoire consistant à modifier au moins un desdits éléments (par exemple des coefficients),
- une étape de transmission :
   - d'un flux principal conforme au format nominal, constitué par des plans contenant les blocs modifiés au cours de l'étape préparatoire et
   - par une voie séparée dudit flux principal d'une information numérique complémentaire permettant de reconstituer le flux originel à partir du calcul, sur l'équipement destinataire, en fonction dudit flux principal et de ladite information complémentaire. On définit ladite information complémentaire en tant qu'un ensemble constitué de données (par exemple des coefficients décrivant le flux numérique originel ou extraits du flux originel) et de fonctions (par exemple, la fonction substitution ou permutation). Une fonction est définie comme contenant au moins une instruction mettant en rapport des données et des opérateurs. Ladite information complémentaire décrit les opérations à effectuer pour récupérer le flux originel à partir du flux modifié.

La reconstitution du flux originel s'effectue sur l'équipement destinataire (le STB) à partir du flux principal modifié déjà présent sur l'équipement destinataire et de l'information complémentaire envoyée en temps réel comprenant des données et des fonctions exécutées à l'aide de routines (ensemble d'instructions) numériques. L'information complémentaire contient de plus des données de marquage et des routines numériques relatives aux éléments visuels devant être insérés dans le film. L'insertion des éléments visuels se fait en temps réel pendant le désembrouillage du film dans le STB et son affichage à l'écran.

Dans un autre mode de réalisation, les informations complémentaires envoyées à l'équipement destinataire par le serveur ne contiennent pas les données et fonctions permettant l'affichage du flux originel aux endroits et moments correspondants à l'affichage d'un élément visuel. Par exemple, si un élément visuel est affiché dans la partie centrale de l'image, l'information complémentaire envoyée à l'équipement destinataire ne contiendra pas les données et les fonctions qui auraient permis un affichage identique au flux originel pour ladite partie. A la place desdites données et fonctions seront transmises les données de marquage qui auront pour conséquence l'affichage sur l'équipement client de l'élément visuel.

Différentes représentations des éléments visuels sont réalisées. Par exemple, on remplace au début du film une portion du film originel avec une séquence vidéo présentant le nom et l'adresse de l'utilisateur. On utilise également des outils de type image dans l'image (« picture in picture ») ou techniques d'incrustation d'images, pour insérer une image contenant un message ou un identifiant de l'équipement client dans la vidéo, ou bien d'autres outils déjà existant dans les décodeurs numériques présents sur le marché pour l'insertion de texte dans les films vidéos, techniques bien connues par l'homme de l'art. Les portions de texte affichées sont de couleurs changeantes, aussi bien en ce qui concerne le fond que la police. Elles apparaissent pour certaines sur une seule image, et pour d'autres sur toute une série d'images. L'espacement entre les lettres constituant le message est variable. Les polices de caractères utilisées sont changeantes. Le contenu des messages est constitué de messages d'identification du client comme son nom, son adresse ou son numéro de client ou de téléphone et d'informations destinées au client comme des messages à portée juridique informant le client de ses droits et obligations par rapport à la copie du film qu'il possède, du type « M. Untel, ce film ne peut être vu que par vous et votre famille et ne peut en aucun cas faire l'objet d'une copie et d'une distribution commerciale ».

Dans un autre exemple de réalisation, les éléments visuels contiennent des messages destinés au client du type mèl, texto (SMS ou « Short Message Service » en anglais) ou des messages envoyés par le serveur de protection des droits audiovisuels.

Avantageusement, on peut afficher des éléments visuels en modifiant les blocs constituant le flux binaire structuré dans le cas de flux MPEG-2 par exemple.

Avantageusement, dans un flux de type MPEG-4, on peut effectuer le marquage visible en insérant les données de marquage grâce à une track ou piste multimédia supplémentaire dans le flux binaire numérique. Ce flux vidéo supplémentaire peut alors contenir uniquement des éléments visuels qui apparaissent sur des flux vidéos déjà présents. La norme MPEG-4 permet aussi, grâce à la gestion de scènes, de changer la position d'affichage et l'animation de cette nouvelle piste vidéo contenant les éléments visuels.

L'intérêt principal de cette solution est qu'elle permet une authentification rapide et simple du client à qui est destinée une copie d'un programme vidéo. Ladite authentification étant toujours possible sur les éventuelles copies numériques ou analogiques dudit programme. Ainsi, une personne trouvée en possession d'une copie dudit programme, quel que soit son support : analogique ou numérique, doit posséder une copie pour laquelle l'élément visuel l'identifie personnellement. Si l'élément visuel présent sur ladite copie n'identifie pas son actuel détenteur, c'est que ladite copie est frauduleuse : son détenteur n'a pas les droits associés à sa consommation, et la personne identifiée par l'élément visuel a distribué, volontairement ou non, une copie dudit programme pour lequel il ne possède pas les droits de distribution. Ainsi, l'identification de l'auteur d'une copie pirate d'un film est grandement facilitée par rapport aux autres solutions disponibles : d'une part, elle ne nécessite plus de comparaison entre la copie à tester et l'original puisque l'élément visuel est visible et directement compréhensible ; d'autre part elle ne nécessite pas de dispositif complexe puisqu'un simple visionnage suffit à identifier la personne à l'origine d'une copie.

La présente invention représente un procédé pour le marquage visible approprié et personnalisé de films vidéo afin de dissuader les copies illicites et s'applique à tout contenu vidéo numérique structuré, à tout système édifié sur le principe client serveur décrit, ainsi qu'à tout système de distribution de DVDs et disques CDs.

Un exemple d'application décrit dans la présente invention est l'ajout du marquage visible dans les « screeners ». Les « screeners » sont des copies VHS ou DVD des films prêts à être distribués dans les salles de cinéma et qui s'adressent à des professionnels du cinéma (critiques, distributeurs) dans certains pays comme aux Etats-Unis. Ceux-ci ont besoin d'avoir une version des films à l'avance pour pouvoir faire leur critique, évaluer l'intérêt du film avant sa sortie. Les « screeners » sont donc indispensables au fonctionnement des studios cinématographiques. Toutefois, ils sont l'une des principales sources de piratage de films non encore sortis en DVD (le piratage lié aux « screeners » touche les films juste avant ou juste après leur sortie dans les salles de cinéma).

En appliquant la présente invention basée sur une analyse du flux vidéo et de la transmission séparée d'un flux principal modifié et d'information complémentaire contenant des données de marquage, sur les « screeners » DVD, leurs destinataires ne pourront plus faire des copies numériques et les diffuser. Par exemple, pour chaque destinataire de « screeners », on introduit dans le film son nom et son adresse de manière visible. Si la personne diffuse le film, son nom va apparaître en clair à tous les endroits où elle diffusera le film, ce qui dévoilera la source de la duplication non autorisée. De cette manière, on effectue un marquage visible et personnalisé, à la différence du tatouage classique qui lui est invisible à l'oeil nu. Un exemple simple est l'incrustation du nom de la personne ou de l'entreprise à laquelle est destiné le « screener » sur la vidéo affichée, de manière à ce qu'il soit affiché en permanence à l'écran. Grâce à ce marquage personnalisé, si une vidéo analogique est encodée de façon à être distribuée sur Internet de manière illicite, elle portera la signature de la personne à l'origine de la copie piratée. Jusqu'à présent il était très simple et peu risqué de faire une copie de son « screener », c'est ce qui explique le succès de cette forme de piratage.

Les éléments visuels introduits dans le flux vidéo restent présents dans le flux même si ce dernier subit différentes modifications et transformations numériques telles que la décompression, la transformation numérique analogique, le changement de format numérique, la distorsion, la re-compression, le montage, la rotation, la manipulation géométrique de l'image à condition qu'elles laissent la vidéo compréhensible. La raison en est que toutes ces modifications ont pour objectif de ne pas trop altérer le contenu des images de la vidéo de façon à ce qu'elle reste compréhensible, donc puisque l'élément visuel est volontairement affiché et compréhensible, celui-ci le restera aussi après un de ces traitements.

La technologie décrite dans la présente invention est complémentaire à d'autres technologies de protection et de traçabilité, telles que le tatouage déjà cité, qui peuvent être introduites dans le flux vidéo numérique à partir des données de marquage qui dans ce cas permettront l'affichage d'une marque visible et d'une marque invisible. Le procédé de la présente invention permet en effet d'ajouter, en plus d'un marquage visible, des modifications invisibles dans le flux selon des méthodes de « watermarking » (filigranage ou tatouage), et / ou de « fingerprint » (technique utilisée pour distinguer différentes copies d'un même contenu suivant son destinataire en comparant le filigrane inséré dans la vidéo avec ceux préalablement sauvegardés dans une base de donnée associée), et / ou de stéganographie (technique permettant de dissimuler des informations au sein d'un contenu de type texte, vidéo ou image), sur les flux vidéo distribués.

D'autres personnes ont déjà pensé à utiliser ce tatouage personnalisé dans le cadre de la protection de films numériques en encodant une version du film par utilisateur, sans que ces solutions ne soient viables commercialement. La technologie de la présente invention contourne ce problème d'une compression du film par client puisque toutes les personnes reçoivent le même film compressé, seules les données de marquage envoyées diffèrent d'un client à l'autre et sont personnalisées pour chaque client. Grâce à la présente invention, les studios peuvent utiliser librement les « screeners » pour promouvoir leurs films et contrer la principale source de copies illicites de films de haute qualité.

Un exemple de réalisation est l'introduction du nom et de l'adresse de la personne à qui est destiné le film et qui ne doit pas le diffuser en remplaçant des parties de l'image d'origine par une nouvelle image conforme au format de la vidéo et contenant les coordonnées du client. Prenons par exemple le cas des flux MPEG-2 qui est intéressant car les films en format DVD ou DVB en sont issus. Un flux vidéo numérique MPEG-2 est constitué de séquences d'images (plans ou frames (trames)), regroupées en groupes d'images « Groups Of Pictures » (GOPs). Une image peut être de type I (Intra), P (Prédite), B (Bidirectionnelle). Les images I sont les images de référence, elles sont entièrement codées et sont donc de taille élevée et ne contiennent pas d'information sur le mouvement. Les trames P sont des plans prédits à partir de plans I et/ou P précédents, grâce à des vecteurs de mouvement dans une seule direction, dite en avant « forward ». Les plans B sont dits bidirectionnels, ils sont liés aux plans I et/ou P les précédant ou les suivant par des vecteurs de mouvement dans les deux directions temporelles (en avant, « forward » et en arrière, « backward »). Les vecteurs de mouvement représentent des vecteurs bidimensionnels utilisés pour la compensation de mouvement. Ils fournissent la différence de coordonnées entre une partie de l'image courante et une partie de l'image de référence. Une image peut être organisée par « slices » ou tranches, par exemple comme dans MPEG-2. Une image ou une trame est constituée de macroblocs, eux-mêmes constitués de blocs. Une manière d'introduire les informations complémentaires de modification est d'encoder le nom et l'adresse de l'utilisateur sur un nombre de blocs, macroblocs ou « slices » avec le même format que le flux originel, en l'occurrence MPEG-2, de remplacer les macroblocs d'origine avec les macroblocs construits pour la modification dans chaque image. Une autre possibilité est de superposer l'information complémentaire introduite sur les macroblocs existants. Cette substitution ou cette superposition est réalisée grâce aux informations complémentaires envoyées par le serveur vers le client et qui contiennent des données et des fonctions à exécuter sur le flux principal modifié pour obtenir le flux d'origine marqué. Ainsi, pour les parties de l'image ne devant pas supporter de marque d'identification sous forme d'un élément visuel, les informations complémentaires spécifieront à l'équipement client quelle est la fonction à appliquer sur le flux principal pour obtenir le flux d'origine ; pour les parties de l'image devant supporter l'apposition d'un élément visuel, les informations complémentaires spécifieront à l'équipement client qu'il doit remplacer les structures correspondantes (« slices », macroblocs et blocs) du flux principal modifié par les structures véhiculées par les données de marquage, contenues dans les informations complémentaires, qui correspondent à une image contenant le message (texte ou autre) à afficher sur l'équipement client de façon à identifier le client associé.

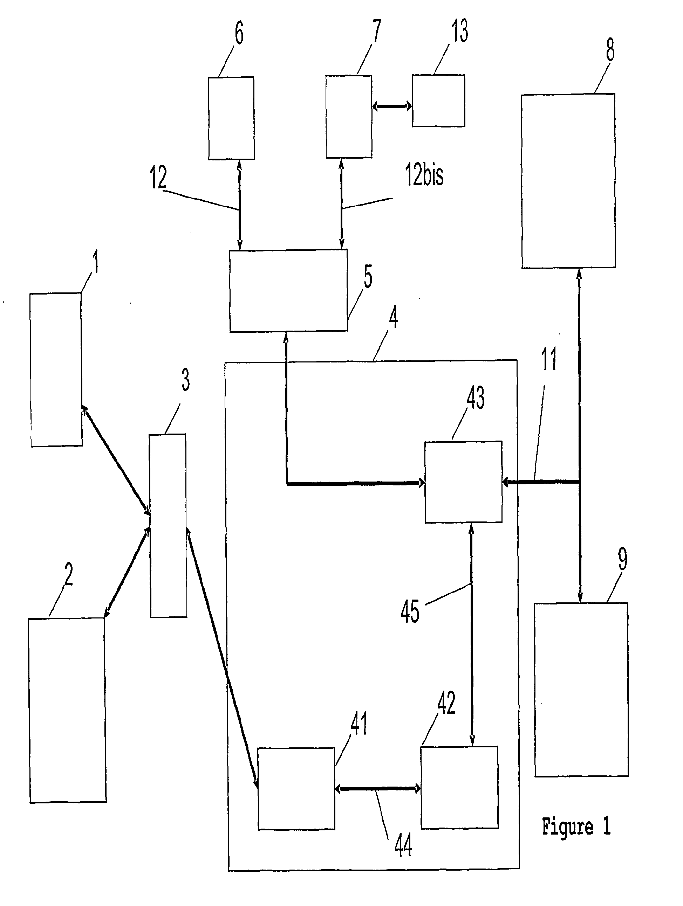

L'invention sera mieux comprise à la lecture d'un exemple de réalisation de l'invention, en se référant à la figure 1.

Dans cet exemple de réalisation, l'invention concerne une séquence vidéo encodée selon le format MPEG-2, sans que cela ne constitue une réduction de la portée de la présente invention.

Dans cet exemple, le contenu vidéo numérique crypté est contenu sur un support DVD (1) et le cryptage utilisé s'appuie sur une technique bien connue de l'homme de l'art à base de clés. Le contenu du DVD (1) est envoyé au décodeur numérique du client (4) aussi appelé Set Top Box (4) via une interface d'acquisition vidéo (3). Le contenu vidéo du DVD (1) est alors transféré, au sein du Set Top Box (4) à un module de décryptage (41). Le module de décryptage (41) décrypte le contenu du DVD (1) et envoie la vidéo décryptée au format MPEG-2 (44) au module de décodage MPEG-2 (42) du Set Top Box (4). Le module de décodage MPEG-2 décode la vidéo décryptée (44) et transmet la vidéo prête pour affichage (45) au module de marquage autrement appelé module de composition (43) du Set Top Box (4). Ce module de composition (43) sert à apposer un élément visuel d'identification personnelle sur le flux vidéo (45) transmis par le décodeur MPEG-2 (42) en fonction des données de marquage (12) lues depuis une interface d'acquisition des données de marquage (5). Les données de marquage (12) sont lues depuis une carte à puce (6). Le contenu vidéo prêt et marqué de façon personnalisée et visible (11) est alors affiché sur le dispositif d'affichage (8) du client de type télévision ou moniteur. Si le client veut enregistrer le flux vidéo marqué (11) sur un dispositif de stockage (9) de type disque dur, DVD, CD ou cassette VHS, le contenu enregistré contient l'élément visuel d'identification personnelle apposé par le module de composition (43) et n'est donc pas commercialisable.

Dans un autre exemple de réalisation, le contenu vidéo numérique crypté est reçu depuis un dispositif de réception satellite ou parabole (2) et transite vers le Set Top Box (4) via un dispositif d'acquisition vidéo (3).

Dans un autre exemple de réalisation, les données de marquage (12 bis) sont reçues par l'interface d'acquisition des données de marquage (5) depuis un serveur distant (7).

Dans une variante de cet exemple de réalisation, le serveur distant (7) est un serveur de protection des droits audiovisuels et est relié à un serveur de messagerie (13) comme un serveur de mèl (« email » en anglais) ou un serveur de texte (SMS ou « Short Message Service » en anglais) ou un serveur utilisé pour le suivi de la clientèle de la location de la vidéo protégée. Ce serveur de messagerie (13) envoie occasionnellement au serveur de protection des droits audiovisuels (7) au moins un message destiné au client auquel appartient le décodeur (4). Ce message est alors inclus dans les données de marquage (12bis) de façon à ce que ledit message puisse être affiché sur l'écran (8) du client.

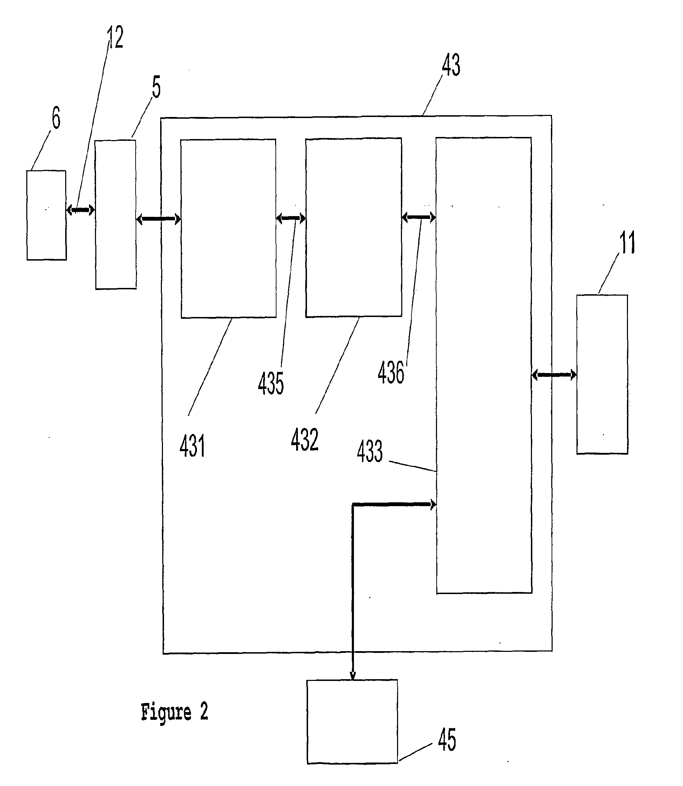

Le fonctionnement du module de composition (43) sera mieux compris à la lecture de l'exemple de réalisation suivant s'appuyant sur les dessins de la figure 2.

Les données de marquage (12) provenant de la carte à puce (6) sont lues par une interface de type lecteur de carte à puce (5) et envoyées à un module d'interprétation des données de marquage (431). Ce module d'interprétation (431) fait partie du module de composition (43). Le module d'interprétation (431) a pour but de transformer les informations binaires des données de marquage (12) en informations de marquage (435). Ainsi, dans l'exemple de réalisation qui nous intéresse, le module d'interprétation (431) transforme les données de marquage (12) en une chaîne de caractères contenant un identifiant du client (435), comme par exemple son nom. Cette chaîne de caractères est envoyée au module de détermination de forme de l'élément visuel (432) qui décide d'introduire ladite chaîne (435) à un emplacement aléatoire sur la vidéo marquée (11) de façon à générer des objets de marquage (436) susceptibles d'être affichés sur un écran. Le module de détermination de la forme (432) détermine également la couleur, la police de caractère, la taille et la durée d'apparition de la chaîne de caractère (435) sur l'écran. Une fois toutes les caractéristiques d'affichage de l'élément visuel (436) contenant la chaîne de caractères (435) définies de façon à générer des objets de marquage (436), ceux-ci (436) sont transférés à un module d'incrustation d'objet sur de la vidéo (433). Le module d'incrustation d'objet (433) ajoute l'élément visuel (436) sur la vidéo (45) de façon à obtenir une vidéo marquée de façon personnalisée (11) sur laquelle se trouve la chaîne de caractères (435).

Dans un autre exemple de réalisation, le module d'interprétation des données de marquage (431) extrait une image (435) des données de marquage (12). L'image (435) contient un identifiant du client comme son nom et son adresse écrits sur un cadre coloré. L'image (435) est transmise au module de détermination de la forme (432) qui décide de façon aléatoire de la position de l'image (435) sur la vidéo marquée (11) de façon à générer un objet de marquage (436). Le module d'incrustation d'objet sur de la vidéo (433) traite alors la vidéo (45) de façon à lui apposer l'élément de personnalisation (436) pour en faire une vidéo marquée (11).

Dans un autre exemple de réalisation, le module d'interprétation des données de marquage (431) génère, en plus et au sein des informations de marquage (435), une signature numérique (435) à partir des données de marquage (12). Cette signature numérique (435) est un identifiant du client et / ou de la session de visionnage et / ou du dispositif client et / ou un message. La signature est transmise au module de détermination de la forme (432) qui va générer un motif de tatouage (436) , invisible pour le système visuel humain et caractéristique de ladite signature (435) de manière à ce que l'opération inverse de récupération de la signature à partir du motif de tatouage soit possible, en utilisant éventuellement le contenu de la base de données de profils client (702). Le motif de tatouage invisible (436) est incrusté dans la vidéo (45) par le module d'incrustation (433) après son décodage par le module de décodage MPEG-2 (42), via une série de modifications invisibles au sein de la vidéo (45) après décodage. La génération d'un tatouage (436) invisible pour le système visuel humain à partir de la signature numérique (435) est effectuée selon des techniques de « watermarking » (tatouage), de « fingerprint » (tatouage identifiant le destinataire d'un flux vidéo) ou de stéganographie classiques et connues de l'homme de l'art. Un exemple non limitatif est le suivant : la signature numérique est cryptée selon une technique de cryptage classique, et la chaîne numérique ainsi obtenue est répétée de façon à générer une trame d'échantillons d'un bruit pseudo aléatoire dont le nombre d'échantillons est égal au nombre de pixels de chaque image de la vidéo à tatouer (45). Chaque bit de ce bruit pseudo aléatoire est alors assigné à un pixel pouvant valoir 0 ou 1. Les pixels ainsi obtenus sont arrangés de façon à former des colonnes et des lignes. Cette technique conduit à l'obtention d'une image binaire (436) constituée de pixels de valeur 0 ou 1. Les « 0 » et les « 1 » constituant cette image sont alors ajoutés aux LSB (bits de poids faible) de chaque pixel de chaque image de la vidéo (45) par le module d'incrustation (433), introduisant ainsi des modifications invisibles pour un oeil humain et caractéristiques de la signature numérique (435) dans la vidéo (45). Il est alors possible de détecter et de récupérer la signature numérique lors d'une étape ultérieure en effectuant une comparaison entre le flux vidéo d'origine, et le flux vidéo reconstitué et marqué (11). En cas de différence entre le LSB d'origine et le LSB recomposé, le bit détecté est « 1 », dans le cas contraire, il vaut « 0 ».

Un autre exemple de réalisation consiste à modifier des pixels uniquement en certains points du flux vidéo (45), lesdits points étant déterminés à l'aide de l'exploitation d'une clé numérique stockée dans le serveur de base de données de profils client (702). Ladite modification consiste à inverser le LSB lorsque le bit à coder est à « 1 », et à le laisser inchangé dans le cas où il vaut « 0 ». Là encore, un bruit pseudo aléatoire est obtenu par cryptage de la signature de façon à être inséré dans la vidéo (45). Une clé numérique dédiée est alors utilisée pour calculer les positions des pixels modifiés et est stockée sur le serveur de base de données de profils client (702) de façon à pouvoir détecter et recomposer le message codé lors d'une phase ultérieure de détection et de récupération de la clé numérique. Durant cette dernière phase, le module de détection détermine les positions des pixels modifiés à l'aide de la clé numérique dédiée obtenue depuis le serveur de base de données de profils client (702) et compare alors la valeur des pixels du flux vidéo d'origine à celles du flux vidéo à tester en chacun de ces points.

Plus généralement, toutes les techniques utilisées dans le cadre des technologies de « watermarking », de « fingerprinting » et de stéganographie, connues de l'homme de l'art, sont utilisées pour :
- Déterminer les points ou zones de l'image de la vidéo (45) à modifier pour insérer la signature;
- Mettre en forme la trame binaire à insérer dans la vidéo, générée à partir de la signature numérique (435), incluant notamment mais non exclusivement d'éventuels codes d'erreur, de la redondance et du cryptage;
- Modifier le flux vidéo (45) de façon à intégrer le motif de tatouage (436).

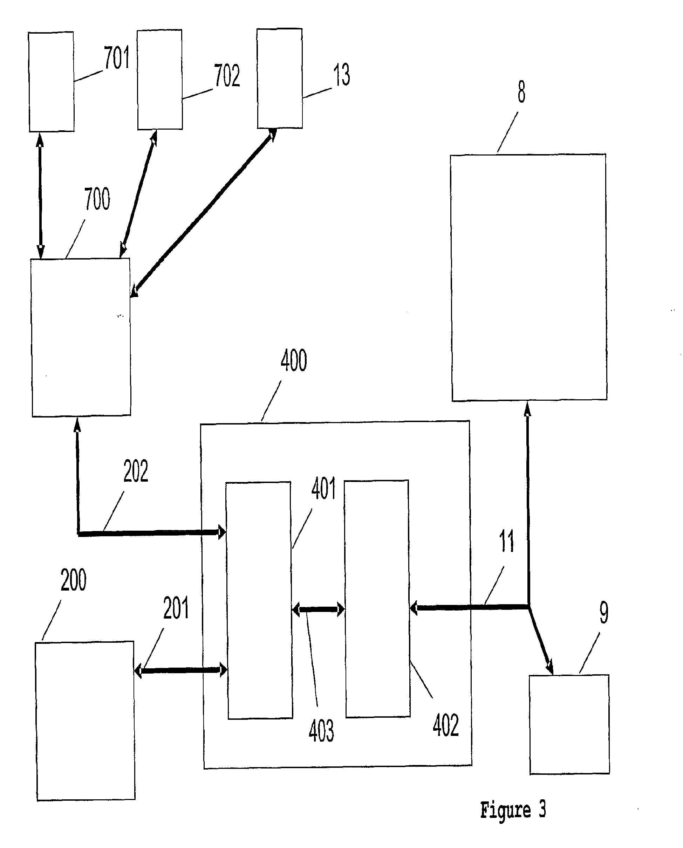

La présente invention peut combiner l'apposition d'un élément visuel au flux vidéo avec un système de diffusion sécurisé de flux. Un exemple de réalisation de cette invention est décrit ci-dessous en référence à la figure 3.

Dans cet exemple de réalisation, la vidéo est brouillée par un système qui concerne un format de flux nominal constitué par une succession de trames comprenant chacune au moins un bloc numérique regroupant un certain nombre de coefficients correspondant à des éléments vidéo simples codés numériquement selon un mode précisé à l'intérieur du flux concerné et utilisé par tous les décodeurs vidéos capables de le décoder afin de pouvoir l'afficher correctement. Ce procédé comporte : une étape préparatoire consistant à modifier au moins un desdits éléments (par exemples des coefficients) du flux originel ; une étape de transmission :
- d'un flux principal conforme au format nominal (201), constitué par des plans contenant les éléments modifiés au cours de l'étape préparatoire depuis un serveur vidéo (200) et
- par une voie séparée dudit flux principal (201) d'une information numérique complémentaire (202) permettant de reconstituer le flux originel à partir du calcul, sur l'équipement destinataire (400), en fonction dudit flux principal (201) et de ladite information complémentaire (202). On définit ladite information complémentaire (202) comme un ensemble constitué de données (par exemple des coefficients décrivant le flux numérique originel ou extraits du flux originel) et de fonctions (par exemple, la fonction substitution ou permutation). Une fonction est définie comme contenant au moins une instruction mettant en rapport des données et des opérateurs. Ladite information complémentaire (202) décrit les opérations à effectuer pour récupérer le flux originel à partir du flux modifié.

Dans cet exemple de réalisation, ladite information numérique complémentaire (202) contient en plus des données et fonctions nécessaires à la reconstitution du flux nominal, des données et des fonctions exécutées à l'aide de routines (ensemble d'instructions) numériques destinées à ajouter un élément visuel sur la vidéo reconstituée (11).

Dans cet exemple, le « Set-Top-Box » (400) est situé chez le client. La reconstitution du flux originel marqué (11) s'effectue sur l'équipement destinataire (le STB) (400) à partir du flux principal modifié (201) et de l'information complémentaire envoyée en temps réel (202). L'équipement client (400) comprend un dispositif de composition de flux binaire (401) et un décodeur (402). Le dispositif de composition de flux binaire (401) modifie le flux principal modifié (201) de façon conforme aux fonctions et données inclues dans les informations complémentaires (202) de façon à : d'une part rendre le flux principal modifié (201) compréhensible pour un oeil humain ; d'autre part ajouter au flux reconstitué un élément visuel, ledit élément visuel étant un identificateur du client ou un message qui lui est destiné. Le flux binaire ainsi généré (403) est transféré au décodeur (402) qui le décode pour générer une vidéo marquée (11). La vidéo marquée (11) est affichée sur le dispositif d'affichage du client (8). Si le client ou un tiers veut enregistrer le flux vidéo marqué (11) sur un dispositif de stockage (9) de type disque dur, DVD, CD ou cassette VHS, le contenu enregistré contient l'élément visuel d'identification personnelle.

Les informations complémentaires (202) sont envoyées à l'équipement par un serveur de gestion des droits des clients (700). Ce serveur (700) a accès aux informations complémentaires originelles (701) permettant la reconstitution du flux principal modifié (201) sans marque et à une base de données de profils clients (702). Le serveur envoie en permanence les informations complémentaires originelles (701) et des données de marquage spécifiques au client calculées grâce à la base de données client (702).

Lorsque le client désire regarder le contenu vidéo, il adresse une demande au serveur de gestion des droits des clients (700). Celui-ci vérifie par un moyen standard (par exemple, une base de données) les droits du client pour le contenu vidéo demandé et si le client est autorisé à regarder le contenu vidéo, le serveur de gestion des droits des clients (700) envoie l'information numérique complémentaire (202) au fur et à mesure de la lecture du contenu sur l'équipement client.

Dans un autre exemple de réalisation, le serveur (700) décide en temps réel d'envoyer des informations complémentaires (202) personnalisées en fonction du client (400) à qui elles sont adressées en envoyant soit une partie des informations complémentaires d'origine (701), soit les données de marquage spécifiques au client calculées grâce à la base de données clients (702). Ainsi, le client ne reçoit pas les informations complémentaires (202) qui lui permettraient d'afficher le flux nominal là où se trouve une marque d'identification.

Dans un autre exemple de réalisation, le serveur (700) décide en temps réel d'envoyer des informations complémentaires (202) personnalisées en fonction du client (400) à qui elles sont adressées en envoyant soit une partie des informations complémentaires d'origine (701), soit les données de marquage spécifiques au client calculées grâce à la base de données clients (702), soit une partie des informations complémentaires d'origine (701) modifiées en fonction de la base de données clients (702). Les modifications apportées à l'information complémentaire d'origine consistent notamment mais non exclusivement à ajouter des instructions destinées au module de composition (401) de manière à lui imposer d'inverser le LSB de certains coefficients visuels du flux comme des coefficients DC par exemple. L'absence ou non d'une inversion sur un LSB permettra, lors d'une étape ultérieure de récupération de la signature numérique du flux consistant à comparer le flux vidéo d'origine avec le flux vidéo marqué (11), de recomposer un bit de la signature numérique. Plus généralement, les modifications apportées à l'information complémentaire sont utilisées de manière à insérer une modification invisible au sein du flux vidéo reconstitué et marqué (11), elles consistent donc à indiquer au module de composition (401) comment insérer une signature numérique au sein du flux numérique (403) selon toute méthode de « watermarking », « fingerprint » ou stéganographie existante et applicable sur un flux vidéo encore compressé (avant décodage : notamment sur des coefficients dans le domaine fréquentiels).

Dans un autre exemple de réalisation, le serveur (700) qui envoie les informations complémentaires (202) au décodeur du client (400) est en liaison avec un serveur de messagerie (13) qui peut être de type serveur de mèl (ou « email »), serveur de texto (ou SMS) ou serveur de messagerie instantanée (comme par exemple « IRC » : « Internet Relay Chat »). Ce serveur de messagerie (13) relaie les messages destinés au client possédant l'équipement client (400) auquel les informations complémentaires (202) sont destinées vers le serveur de protection des droits audiovisuels (700). Le serveur de protection audiovisuel (700) insère alors ces messages au sein des informations complémentaires (220) de façon à ce que lesdits messages s'affichent sur le dispositif d'affichage (8) du client auxquels ils sont destinés.

## Revendications

1. Procédé de distribution de flux vidéo à une pluralité de destinataires, comportant une étape de marquage consistant à ajouter sur ledit flux vidéo au moins un élément visuel **caractérisé en ce que** ladite étape de marquage est appliquée à un flux vidéo originel commun à tous les destinataires, et est personnalisée pour une partie au moins des destinataires par l'ajout d'un élément visuel spécifique à l'équipement client destinataire.

2. Procédé de distribution de flux vidéo selon la revendication 1, **caractérisé en ce que** ledit élément visuel est généré en deux étapes, une première étape consistant à traiter des données de marquage au format quelconque de façon à générer des objets de marquage décrivant l'élément visuel à afficher, et une deuxième étape consistant à ajouter ledit élément visuel sur ledit flux vidéo.

3. Procédé de distribution de flux vidéo selon la revendication 2, **caractérisé en ce que** l'étape d'ajout dudit élément visuel est accompagnée d'une étape d'ajout de modifications invisibles.

4. Procédé de distribution de flux vidéo selon la revendication 3, **caractérisé en ce qu'**au moins l'une desdites étapes d'ajout est effectuée avant le décodage du flux vidéo dans l'équipement destinataire.

5. Procédé de distribution de flux vidéo selon la revendication 3, **caractérisé en ce qu'**au moins l'une desdites étapes d'ajout est effectuée après le décodage du flux vidéo dans l'équipement destinataire.

6. Procédé de distribution de flux vidéo selon l'une des revendications 4 ou 5, **caractérisé en ce que** lesdites modifications invisibles sont caractéristiques d'une signature numérique, ladite signature numérique étant détectable par un algorithme approprié de détection appliqué au flux contenant lesdites modifications invisibles.

7. Procédé de distribution de flux vidéo selon la revendication 6, **caractérisé en ce que** ladite signature numérique est obtenue à partir des données de marquage.

8. Procédé de distribution de flux vidéo selon l'une des revendications 2 à 7, **caractérisé en ce que** les données de marquage sont différentes et personnalisées pour chaque client.

9. Procédé de distribution de flux vidéo selon la revendication 8, **caractérisé en ce que** ledit élément visuel introduit dans ledit flux vidéo est différent et personnalisé pour chaque client.

10. Procédé de distribution de flux vidéo selon la revendication 9, **caractérisé en ce que** ledit élément visuel est un identifiant du client visible lors de l'affichage du flux vidéo marqué.

11. Procédé de distribution de flux vidéo selon la revendication 9, **caractérisé en ce que** l'élément visuel inclut un message destiné au client.

12. Procédé de distribution de flux vidéo selon l'une des revendications précédentes, **caractérisé en ce que** l'étape de génération des objets de marquage à partir des données de marquage permet de faire varier la position sur l'écran, la couleur, l'espacement, la géométrie et la présence dudit élément visuel, pendant tout ou partie de l'affichage dudit flux vidéo.

13. Procédé de distribution de flux vidéo selon la revendication 12, **caractérisé en ce que** l'étape d'ajout dudit élément visuel sur ledit flux vidéo s'effectue sur l'équipement serveur multimédia à partir duquel ledit flux vidéo est envoyé au client dans une phase ultérieure.

14. Procédé de distribution de flux vidéo selon la revendication 12, **caractérisé en ce que** l'étape d'ajout dudit élément visuel sur ledit flux vidéo s'effectue sur l'équipement client.

15. Procédé de distribution de flux vidéo selon la revendication 14, **caractérisé en ce que** les données de marquage proviennent d'un serveur de protection des droits audiovisuels lors du visionnage dudit flux vidéo.

16. Procédé de distribution de flux vidéo selon la revendication 14, **caractérisé en ce que** les données de marquage proviennent d'un module présent sur l'équipement client.

17. Procédé de distribution de flux vidéo selon la revendication 15, **caractérisé en ce que** le visionnage dudit flux vidéo est conditionné par la connexion audit serveur de protection des droits audiovisuels.

18. Procédé de distribution de flux vidéo selon la revendication 15, **caractérisé en ce que** le serveur est relié à une base de données de profils clients incluant les données de marquage associées à chaque client.

19. Equipement pour la distribution d'un flux vidéo marqué selon le procédé de la revendication 1 comprenant un module de décodage standard du format dudit flux vidéo, **caractérisé en ce qu'**il comporte en outre un module de composition chargé d'interpréter des données de marquage et d'inclure ledit élément visuel sur ledit flux vidéo.

20. Equipement pour la distribution d'un flux vidéo marqué selon la revendication 19, **caractérisé en ce que** ledit équipement comprend un lecteur de carte à puce relié à une carte à puce contenant lesdites données de marquage.

21. Système pour la fabrication d'un flux marqué selon le procédé de la revendication 1, **caractérisé en ce qu'**il comprend un équipement pour la distribution d'un flux vidéo selon la revendication 19, un moyen de stockage dudit flux vidéo relié audit équipement, un moyen de stockage desdites données de marquage relié audit équipement, un dispositif d'affichage dudit flux vidéo et un dispositif de stockage du flux vidéo modifié.

## Patentansprüche

1. Verfahren zur Videoflussverteilung zu mehreren Zielen, das einen Markierungsschritt beinhaltet, der darin besteht, dem genannten Videofluss wenigstens ein visuelles Element hinzuzufügen, **dadurch gekennzeichnet, dass** der genannte Markierungsschritt auf einen allen Zielen gemeinsamen ursprünglichen Videofluss angewandt wird und für wenigstens einen Teil der Ziele durch Hinzufügen eines speziellen visuellen Elements zu dem Ziel-Client-Gerät kundenspezifisch wird.

2. Verfahren zur Videoflussverteilung nach Anspruch 1, **dadurch gekennzeichnet, dass** das genannte visuelle Element in zwei Schritten erzeugt wird, einem ersten Schritt, der im Verarbeiten der Markierungsdaten in ein beliebiges Format besteht, um Markierungsobjekte zu erzeugen, die das anzuzeigende visuelle Element beschreiben, und einem zweiten Schritt, der im Hinzufügen des genannten visuellen Elements zu dem genannten Videofluss besteht.

3. Verfahren zur Videoflussverteilung nach Anspruch 2, **dadurch gekennzeichnet, dass** der Schritt des Hinzufügens des genannten visuellen Elementes von einem Schritt des Hinzufügens von unsichtbaren Modifikationen begleitet wird.

4. Verfahren zur Videoflussverteilung nach Anspruch 3, **dadurch gekennzeichnet, dass** wenigstens einer der genannten Hinzufügungsschritte vor dem Decodieren des Videoflusses in dem Zielgerät ausgeführt wird.

5. Verfahren zur Videoflussverteilung nach Anspruch 3, **dadurch gekennzeichnet, dass** wenigstens einer der genannten Hinzufügungsschritte nach dem Decodieren des Videoflusses in dem Zielgerät ausgeführt wird.

6. Verfahren zur Videoflussverteilung nach Anspruch 4 oder 5, **dadurch gekennzeichnet, dass** die genannten unsichtbaren Modifikationen für eine digitale Signatur charakteristisch sind, wobei die genannte digitale Signatur mit einem geeigneten Erkennungsalgorithmus erkannt werden kann, der auf den die genannten unsichtbaren Modifikationen enthaltenden Fluss angewandt wird.

7. Verfahren zur Videoflussverteilung nach Anspruch 6, **dadurch gekennzeichnet, dass** die genannte digitale Signatur anhand der Markierungsdaten erhalten wird.

8. Verfahren zur Videoflussverteilung nach einem der Ansprüche 2 bis 7, **dadurch gekennzeichnet, dass** die Markierungsdaten für jeden Client unterschiedlich und kundenspezifisch sind.

9. Verfahren zur Videoflussverteilung nach Anspruch 8, **dadurch gekennzeichnet, dass** das in den genannten Videofluss eingeführte genannte visuelle Element für jeden Client unterschiedlich und kundenspezifisch ist.

10. Verfahren zur Videoflussverteilung nach Anspruch 9, **dadurch gekennzeichnet, dass** das genannte visuelle Element eine sichtbare Kennung des Clients beim Anzeigen des markierten Videoflusses ist.

11. Verfahren zur Videoflussverteilung nach Anspruch 9, **dadurch gekennzeichnet, dass** das visuelle Element eine für den Client bestimmte Nachricht beinhaltet.

12. Verfahren zur Videoflussverteilung nach einem der vorherigen Ansprüche, **dadurch gekennzeichnet, dass** es der Schritt des Erzeugens von Markierungsobjekten von den Markierungsdaten zulässt, dass die Position auf dem Bildschirm, die Farbe, die Platzierung, die Geometrie und die Anwesenheit des visuellen Elementes bei der Anzeige, ganz oder teilweise, des genannten Videoflusses variiert werden können.

13. Verfahren zur Videoflussverteilung nach Anspruch 12, **dadurch gekennzeichnet, dass** der Schritt des Hinzufügens des genannten visuellen Elements zu dem genannten Videofluss auf dem Multimedia-Servergerät erfolgt, von dem der genannte Videofluss in einer späteren Phase zum Client geschickt wird.

14. Verfahren zur Videoflussverteilung nach Anspruch 12, **dadurch gekennzeichnet, dass** der Schritt des Hinzufügens des genannten visuellen Elements zu dem genannten Videofluss auf dem Client-Gerät erfolgt.

15. Verfahren zur Videoflussverteilung nach Anspruch 14, **dadurch gekennzeichnet, dass** die Markierungsdaten von einem Server zum Schützen von audiovisuellen Rechten beim Betrachten des genannten Videoflusses kommen.

16. Verfahren zur Videoflussverteilung nach Anspruch 14, **dadurch gekennzeichnet, dass** die Markierungsdaten von einem Modul kommen, das auf dem Client-Gerät vorhanden ist.

17. Verfahren zur Videoflussverteilung nach Anspruch 15, **dadurch gekennzeichnet, dass** das Betrachten des genannten Videoflusses durch die Verbindung mit dem genannten Schutzserver der audiovisuellen Rechte konditioniert ist.

18. Verfahren zur Videoflussverteilung nach Anspruch 15, **dadurch gekennzeichnet, dass** der Server mit einer Datenbank von Client-Profilen einschließlich der mit jedem Client assoziierten Markierungsdaten verbunden ist.

19. Gerät zur Verteilung eines markierten Videoflusses gemäß dem Verfahren nach Anspruch 1, das ein standardmäßiges Decodierungsmodul des Formats des genannten Videoflusses umfasst, **dadurch gekennzeichnet, dass** es ferner ein Zusammensetzungsmodul mit der Aufgabe umfasst, die Markierungsdaten zu interpretieren und das genannte visuelle Element in den genannten Videofluss einzubeziehen.

20. Gerät zur Verteilung eines markierten Videoflusses nach Anspruch 19, **dadurch gekennzeichnet, dass** das genannte Gerät einen Chipkartenleser umfasst, der mit einer die genannten Markierungsdaten enthaltenden Chipkarte verbunden ist.

21. System zur Herstellung eines markierten Flusses mit dem Verfahren nach Anspruch 1, **dadurch gekennzeichnet, dass** es Folgendes umfasst: ein Videoflussverteilungsgerät nach Anspruch 19, ein mit dem genannten Gerät verbundenes Mittel zum Speichern des genannten Videoflusses, ein mit dem genannten Gerät verbundenes Mittel zum Speichern der genannten Markierungsdaten, eine Vorrichtung zum Anzeigen des genannten Videoflusses und eine Vorrichtung zum Speichern des modifizierten Videoflusses.

## Claims

1. A method of distributing a video stream to a plurality of recipients, comprising a marking step of adding to said video stream at least one visual element, **characterized in that** said step of marking is applied to an original video stream common to all the recipients, and is customized for at least a portion of the recipients by adding a visual element specific to the receiving client equipment.

2. A method of distributing a video stream according to claim 1, **characterized in that** said visual element is generated in two steps, a first step of processing marking data being in any format, to generate marking objects describing the visual element to display, and a second step of adding said visual element to said video stream.

3. A method of distributing a video stream according to claim 2, **characterized in that** said step of adding said visual element is accompanied by a step of adding invisible modifications.

4. A method of distributing a video stream according to claim 3, **characterized in that** at least one of said steps of adding is performed before the decoding of the video stream in the receiving equipment.

5. A method of distributing a video stream according to claim 3, **characterized in that** at least one of said steps of adding is performed after the decoding of the video stream in the receiving equipment.

6. A method of distributing a video stream according to one of claims 4 or 5, **characterized in that** said invisible modifications are characteristics of a digital signature, said digital signature being detectable by an appropriate detection algorithm applied to the stream containing said invisible modifications.

7. A method of distributing a video stream according to claim 6, **characterized in that** said digital signature is obtained from the marking data.

8. A method of distributing a video stream according to one of claims 2 to 7, **characterized in that** the marking data are different and customized for each client.

9. A method of distributing a video stream according to claim 8, **characterized in that** said visual element added in said video stream is different and customized for each client.

10. A method of distributing a video stream according to claim 9, **characterized in that** said visual element is an identifier of the client visible when displaying the marked video stream.

11. A method of distributing a video stream according to claim 9, **characterized in that** the visual element includes a message to the client.

12. A method of distributing a video stream according to one of the preceding claims, **characterized in that** the step of generating the marking objects from the marking data enables changing the position on the screen, the color, the spacing, the geometry, and the presence of said visual element, during all or part of the display of said video stream.

13. A method of distributing a video stream according to claim 12, **characterized in that** the step of adding said visual element to said video stream is performed on the multimedia server device from which said video stream is sent to the client at a later stage.

14. A method of distributing a video stream according to claim 12, **characterized in that** the step of adding said visual element to said video stream is performed on the client equipment.

15. A method of distributing a video stream according to claim 14, **characterized in that** the marking data are output from a server of protection of the audiovisual rights during the viewing of said video stream.

16. A method of distributing a video stream according to claim 14, **characterized in that** the marking data are output from a module present on the client equipment.

17. A method of distributing a video stream according to claim 15, **characterized in that** the viewing of said video stream is conditioned by the connection to said server of protection of the audiovisual rights.

18. A method of distributing a video stream according to claim 15, **characterized in that** the server is connected to a database of client profiles including the marking data associated with each client.

19. An equipment for the distribution of a video stream marked according to the method of claim 1, comprising a standard module for decoding the format of said video stream, **characterized in that** it further comprises a composition module configured to interpret marking data and to include said visual element on said video stream.

20. The equipment for the distribution of a marked video stream according to claim 19, **characterized in that** said equipment includes a smart card reader connected to a smart card containing said marking data.

21. A system for the production of a stream marked according to the method of claim 1, **characterized in that** it comprises an equipment for the distribution of a marked video stream according to claim 19 means for storing said video stream, connected to said equipment, means for storing said marking data, connected to said equipment, a device for displaying said video stream and a device for storing the modified video stream.
